# EUROPEAN PATENT APPLICATION

(11) **EP 1 253 526 A1**
(43) Date of publication of application: **30.10.2002**
(21) Application number: 02290120.1
(22) Date of filing: 17.01.2002
(51) Int. Cl.: G06F 17/18

(54) **Method and system to analyze market trend**

(30) Priority: 19.01.2001 JP 2001012387
(71) Applicant: I.T.M.L. Co., Ltd., Tokyo (JP); Saito, Yoshifuru, Akiruno-shi, Tokyo (JP); Ishii, Yoshikazu, Nishitokyo-shi, Tokyo (JP)
(72) Inventor: Saito, Yoshifuru, Akiruno-shi, Tokyo (JP); Takasuka, Yoshihiro, Green Capital Nakamagome 308, Tokyo (JP); Ishii, Yoshikazu, Tokyo (JP)
(74) Representative: Poulin, Gérard

(57) **Abstract**

The invention offers a way to objectively analyze information obtained by monitoring market trends, and to make appropriate assessments of even individual information inside the monitored results. Market trend data resulting from monitoring of market trends are rearranged by an input data sorting portion (2a) of an information processing device (2) to form a data set of a predetermined form, a wavelet transform processing portion (2b) applies a discrete wavelet transform to the data set, and the wavelet spectrum obtained as a result is used to express amounts of data separately for each rate of change of elemental values in the data set. Additionally, a multi-resolution analysis processing portion (2c) applies an inverse wavelet transform to the waveIet spectra of the respective levels, thereby to obtain multi-resolution analysis results corresponding to respective resolution levels of the data set. Then, a multi-resolution analysis result processing portion (2d) performs such operations as summation of the multi-resolution analysis results or correlation operations of the data sets.

## Description

### BACKGROUND OF THE INVENTION

The present invention relates to market trend analysis technology for analyzing various types of market trends objectively by means of information processing.

In all types of markets including those for products, services and securities, a significant portion of the work of analyzing market trends involves modifying disparate data monitored by means of polls or the like into a form of information which can be readily understood, which requires the raw data to be condensed into an amount that is manageable by humans. Conventionally, this type of work has been performed by expressing the market trend monitoring results in a statistically manipulated form such as by averaging or frequency distribution, then asking for written commentary from experts with regard to the results.

However, while averaged information and frequency distributions which are gained by statistical operations will enable one to gain knowledge of overall market trends, some of the information (information such as individual responses to polls and specific information in the monitoring results) which may be of use can be filtered out, thus depriving experts viewing the information of much data which may be noteworthy. Additionally, while these experts are often asked for their opinions on matters which may not be cognizable from simple numerical data, such opinion work must inevitably rest on the subjective judgments of the experts who, being human, are fallible to prejudices based on past experience, and some means to arrive at analysis results in a more objective manner would be desirable.

### BRIEF SUMMARY OF THE INVENTION

The present invention has been made in view of the above situation, and has the object of offering a technique that enables objective analysis of information obtained by monitoring market trends, and enables suitable evaluations of even individual pieces of data within the monitoring results.

In order to achieve the above-described object, the present invention employs functions for converting unorganized data obtained by monitoring market trends into a form of information capable of being readily understood by humans, and expressing the information in an amount capable of being handled by humans, and functions for applying a wavelet transform, which is a purely mathematical procedure, to the collected information. As a result, it is possible to objectively deconstruct and analyze the information, so as to appropriately perform analysis and assessments of market trends which occur as a result of the complicated interplay of a myriad of factors.

That is, the present invention offers a new analytic technique, heretofore unknown, which is capable of performing an objective structural analysis of market trends which have a complex structure using a linear spatial procedure, so as to enable, for example, an information processing method for analyzing market trend information as obtained by polls, access logs or the like, using a linear spatial procedure. With this method, multi-resolution analysis of the information from such polls or access logs is performed using wavelet transforms, thereby to extract features in the information. The gist of the analysis technique of the present invention is as follows.

A first market trend analyzing method according to the present invention comprises steps of performing a wavelet transform on numerical data, obtained by numericizing information acquired by monitoring market trends, to obtain a wavelet spectrum of the numerical data; and expressing the data such as to show an amount of information at each rate of change of the numerical data. This market trend analyzing method is an information processing method which analyzes market trends using a linear spatial technique. For example, it may involve performing a discrete wavelet transform on information from polls, access logs or the like, using the wavelet spectrum to determine the amount of data for each rate of change, using a discrete wavelet transform to determine wavelet spectra displayed separately by more local amounts of change or more general overall amounts of change, and thereby extracting useful information out of disparate market trend information.

A first market trend analyzing device according to the present invention comprises a data sorting portion for forming a data set organized by monitored categories out of numerical data obtained by numericizing information acquired by monitoring market trends; and a converting portion for performing a wavelet transform on the data set; wherein the wavelet spectrum obtained by the converting portion is used to express the data such as to show an amount of information at each rate of change of the numerical data. As a result, it is possible, for example to use the information from polls of market trends and access logs, by reordering or listing the results obtained from such polls or access logs with respect to various categories (an arbitrary number *n* of categories) such as age, sex and content of the response, preparing a data set (*n* or *n* - 1 dimensional) with the number of responses or the content of the polls or access logs as values, performing a discrete wavelet transform on the data set to obtain wavelet spectra, and expressing the amount of data for each rate of change by using these wavelet spectra. That is, market trend data in the raw unorganized as monitored can be reordered or listed with respect to various categories (an arbitrary number *n* of categories) such as age, sex and content of the response, to prepare a data set (*n* or *n* - 1 dimensional) with the number in each category or the values of the unorganized data as monitored used as elements, then to perform a discrete wavelet transform on the data set to compute wavelet spectra and output the amounts of information arranged by rates of change.

A second market trend analyzing method according to the present invention comprises steps of performing a multi-resolution analysis of numerical data, obtained by numericizing information acquired by monitoring market trends, using a discrete wavelet transform; and expressing the data such as to show an amount of information at each rate of change of the numerical data. Hence, a multi-resolution analysis using a discrete wavelet transform can be performed, for example, on information from polls, access logs or the like, the information expressed separately by rate of change, and the results of multi-resolution analysis by discrete wavelet transforms separated by rate of change used to extract features separately by rate of change.

A second market trend analyzing device according to the present invention comprises a data sorting portion for forming a data set organized by monitored categories out of numerical data obtained by numericizing information acquired by monitoring market trends; and an analyzing portion for performing multi-resolution analysis using a discrete wavelet transform on the data set; wherein the results of the multi-resolution analysis by the analyzing portion are used to express the data such as to show an amount of information at each rate of change of the numerical data. This device may further comprise a computing portion for summing the analysis results for a plurality of levels in the multi-resolution analysis results of the analyzing portion. As a result, it is possible, for example to use the information from polls of market trends and access logs, by reordering or listing the results obtained from such polls or access logs with respect to various categories (an arbitrary number *n* of categories) such as age, sex and content of the response, preparing a data set (*n* or *n* - 1 dimensional) with the number of responses or the content of the polls or access logs as values, performing a multi-resolution analysis using a discrete wavelet transform on the prepared data set, and showing the multi-resolution analysis results or results of summation (sum of an arbitrary number *m*) of the multi-resolution analysis results, to express the information separately by rates of change.

A third market trend analyzing method according to the present invention comprises steps of performing a multi-resolution analysis of numerical data, obtained by numericizing information acquired by monitoring market trends, using a discrete wavelet transform with a plurality of base functions to obtain multi-resolution analysis results based on each of the plurality of base functions; determining a correlation factor between the respective multi-resolution analysis results and the numerical data; and assessing, based on the correlation factor, rates of reproduction in the numerical data according to the multi-resolution analysis results when using each of the plurality of base functions. In this method, it is possible further to perform a convolution operation using the multi-resolution analysis results with high rates of reproduction based on the results of assessment of the rates of reproduction. As a result, by performing a multi-resolution analysis using discrete wavelet transforms with a plurality of base functions on information from polls, access logs or the like (the same unorganized data), and determining a correlation factor between these results and the information from the polls, access logs and the like (unorganized data as monitored), it is possible to assess the rates of reproduction of analysis results by selecting the base functions. That is, it is possible to objectively evaluate the rates of reproduction for the case where the selected base function is used for the discrete wavelet conversion. Additionally, by performing a convolution operation using the multi-resolution analysis results with high rates of reproduction, it becomes possible, for example, to predict the significant position in the information from polls, access logs or the like, and thereby to extract useful information from the data obtained from polls, access logs or the like.

A third market trend analyzing device according to the present invention comprises a data sorting portion for forming a data set organized by monitored categories out of numerical data obtained by numericizing information acquired by monitoring market trends; an analyzing portion for performing multi-resolution analysis on the data set using a discrete wavelet transform with a plurality of base functions to obtain multi-resolution analysis results for each of the plurality of base functions; and a correlating portion for determining a correlation factor between the respective multi-resolution analysis results obtained by the analyzing portion and the data set; wherein, based on the correlation factor, rates of reproduction in the data set is assessed according to the multi-resolution analysis results when using each of the plurality of base functions. This device may further comprise a computing portion for performing a convolution operation using the multi-resolution analysis results with high rates of reproduction based on the results of assessment of the rates of reproduction. As a result, it is possible, for example to use the information from polls of market trends and access logs, by reordering or listing the results obtained from such polls or access logs with respect to various categories (an arbitrary number *n* of categories) such as age, sex and content of the response, preparing a data set (*n* or *n* - 1 dimensional) with the number of responses or the content of the polls or access logs as values, performing a multi-resolution analysis using discrete wavelet transforms with a plurality of base functions on the prepared data set, and determining the correlation factors between the respective results and the data set, to objectively evaluate the rates of reproduction for the cases of each of the base functions. Additionally, by means of the convolution operation using the multi-resolution analysis results with high rates of reproduction, it is possible to perform a convolution operation between data with high rates of reproduction, thus acting as a filtering operation for extracting only the significant information from a data set. That is, the third market trend analyzing device according to the present invention can function as a filtering device capable of extracting only the analysis results with high correlation factors based on the results of a correlation operation between a plurality of multi-resolution analysis results and the data set, and performing a convolution operation thereon to extract only the significant information.

According to the present invention as described above, numerical data obtained by numericizing information acquired from the monitoring of market trends is wavelet-converted, so that the wavelet spectrum of the numerical data can be determined to express amounts of information in the numerical data separately by rates of change, and multi-resolution analysis by discrete wavelet transforms can be applied to express amount of information in the numerical data separately by respective rates of change. Furthermore, the multi-resolution analysis results can be summed, a plurality of base functions used, a correlation operation with the original data performed, or a convolution operation between analysis results with high rates of reproduction performed so as to enable an objective analysis of the information obtained by monitoring market trends with a purely mathematical technique. Additionally, since wavelet conversion is used for this mathematical technique, an appropriate assessment can be made on individual information in the monitored results.

That is, according to the present invention, a discrete wavelet transform is applied to a data set in which has been arranged market trends as monitored by polls or the like, and the resulting spectrum, multi-resolution analysis results, correlation factor of the multi-resolution analysis results, and results of a convolution operation on the multi-resolution analysis results are determined, thereby allowing analysis results which reflect not only general overall information, but also individual information to be derived by numerical operations which are based on a linear spatial technique, so as to achieve a more objective analysis of market trends.

### BRIEF DESCRIPTION OF THE DRAWINGS

Fig. 1 is a diagram showing a structural example of a market trend analyzing device according to an embodiment of the present invention.
Fig. 2 is a flow chart showing the procedure of a first mode of market trend analysis according to the same embodiment.
Fig. 3 is a flow chart showing the procedure of a second mode of market trend analysis according to the same embodiment.
Fig. 4 is a graph showing an example of responses to a poll arranged as a one-dimensional data set.
Fig. 5 is a diagram showing the results of computation of a wavelet spectrum of the data set of Fig. 4 using a second-order Daubechies base function.
Fig. 6 shows the Level 1 results of a wavelet multi-resolution analysis using a second-order Daubechies wave function on the data set of Fig. 4.
Fig. 7 shows the Level 2 results of a wavelet multi-resolution analysis using a second-order Daubechies wave function on the data set of Fig. 4.
Fig. 8 shows the Level 3 results of a wavelet multi-resolution analysis using a second-order Daubechies wave function on the data set of Fig. 4.
Fig. 9 shows the Level 4 results of a wavelet multi-resolution analysis using a second-order Daubechies wave function on the data set of Fig. 4.
Fig. 10 shows the Level 51 results of a wavelet multi-resolution analysis using a second-order Daubechies wave function on the data set of Fig. 4.
Fig. 11 shows the Level 6 results of a wavelet multi-resolution analysis using a second-order Daubechies wave function on the data set of Fig. 4.
Fig. 12 shows the Level 7 results of a wavelet multi-resolution analysis using a second-order Daubechies wave function on the data set of Fig. 4.
Fig. 13 is a diagram showing the sum (results of superimposition) of the Level 1 to Level 3 results among the multi-resolution analysis results of Figs. 6-12.
Fig. 14 is a diagram showing the sum (results of superimposition) of the Level 1 to Level 4 results among the multi-resolution analysis results of Figs. 6-12.
Fig. 15 is a diagram showing the results of averaging according to a conventional method with respect to the data set of Fig. 4.
Fig. 16 is a graph showing an example of responses to a survey concerning "Living an organized lifestyle" and "Getting enough sleep" as a two-dimensional data set.
Fig. 17 is a graph showing an example of responses to a survey concerning "Living an organized lifestyle" and "Watching your diet (natural or health-oriented)" as a two-dimensional data set.
Fig. 18 is a graph showing an example of responses to a survey concerning "Living an organized lifestyle" and "Selecting foods on the basis of health rather than taste" as a two-dimensional data set.
Fig. 19 is a graph showing an example of responses to a survey concerning "Living an organized lifestyle" and "Preventing colds (by wearing masks, using mouthwash, etc.)" as a two-dimensional data set.
Fig. 20 shows the Level 1 results of a wavelet multi-resolution analysis using a second-order Daubechies wave function on the data set of Fig. 16.
Fig. 21 shows the Level 2 results of a wavelet multi-resolution analysis using a second-order Daubechies wave function on the data set of Fig. 16.
Fig. 22 shows the Level 3 results of a wavelet multi-resolution analysis using a second-order Daubechies wave function on the data set of Fig. 16.
Fig. 23 shows the Level 4 results of a wavelet multi-resolution analysis using a second-order Daubechies wave function on the data set of Fig. 16.
Fig. 24 shows the Level 1 results of a wavelet multi-resolution analysis using a second-order Daubechies wave function on the data set of Fig. 17.
Fig. 25 shows the Level 2 results of a wavelet multi-resolution analysis using a second-order Daubechies wave function on the data set of Fig. 17.
Fig. 26 shows the Level 3 results of a wavelet multi-resolution analysis using a second-order Daubechies wave function on the data set of Fig. 17.
Fig. 27 shows the Level 4 results of a wavelet multi-resolution analysis using a second-order Daubechies wave function on the data set of Fig. 17.
Fig. 28 shows the Level 1 results of a wavelet multi-resolution analysis using a second-order Daubechies wave function on the data set of Fig. 18.
Fig. 29 shows the Level 2 results of a wavelet multi-resolution analysis using a second-order Daubechies wave function on the data set of Fig. 18.
Fig. 30 shows the Level 3 results of a wavelet multi-resolution analysis using a second-order Daubechies wave function on the data set of Fig. 18.
Fig. 31 shows the Level 4 results of a wavelet multi-resolution analysis using a second-order Daubechies wave function on the data set of Fig. 18.
Fig. 32 shows the Level 1 results of a wavelet multi-resolution analysis using a second-order Daubechies wave function on the data set of Fig. 19.
Fig. 33 shows the Level 2 results of a wavelet multi-resolution analysis using a second-order Daubechies wave function on the data set of Fig. 19.
Fig. 34 shows the Level 3 results of a wavelet multi-resolution analysis using a second-order Daubechies wave function on the data set of Fig. 19.
Fig. 35 shows the Level 4 results of a wavelet multi-resolution analysis using a second-order Daubechies wave function on the data set of Fig. 19.
Fig. 36 is a diagram showing the results of summation of the multi-resolution analysis results of Figs. 20, 21 and 22.
Fig. 37 is a diagram showing the results of summation of the multi-resolution analysis results of Figs. 24, 25 and 26.
Fig. 38 is a diagram showing the results of summation of the multi-resolution analysis results of Figs. 28, 29 and 30.
Fig. 39 is a diagram showing the results of summation of the multi-resolution analysis results of Figs. 32, 33 and 34.

### DETAILED DESCRIPTION OF THE INVENTION

### <Device Structure>

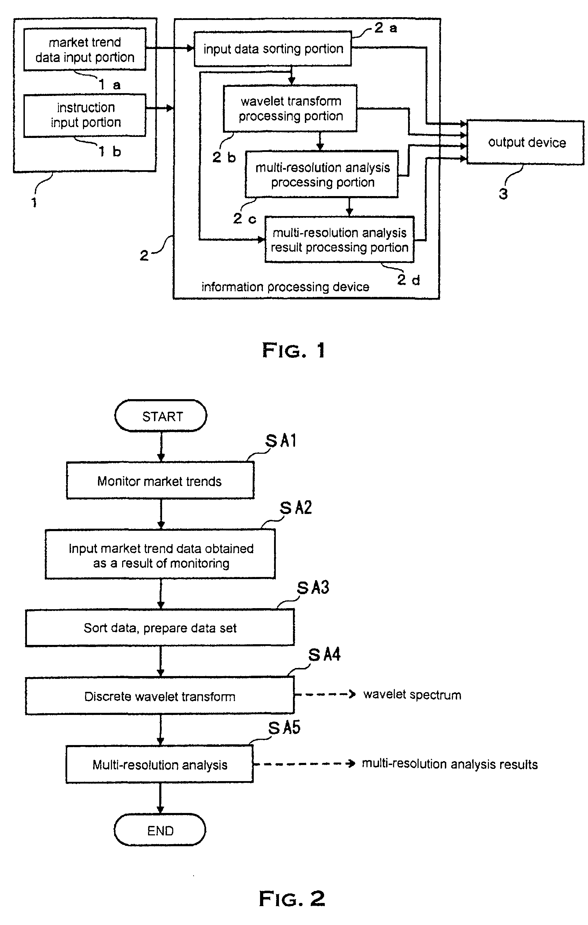

Herebelow, an embodiment of the present invention shall be described with reference to the drawings. Fig. 1 is a diagram showing the structure of a market trend analyzing device according to an embodiment of the present invention. The device of this diagram illustrates a structural example of hardware capable of performing the market trend analysis to be described below, and is composed of an input device 1, an information processing device 2 and an output device 3 as shown in the drawing.

The input device 1 comprises a market trend data input portion 1a for inputting to the information processing device 2 various market trend data obtained by monitoring market trends, and an instruction input portion 1b for inputting to the information processing device 2 instructions such as for indicating the form of information processing. For use as the market trend data, responses to polls by those involved in various markets, or information obtained from access logs or the like recorded for these markets are numericized. If the market trend data is recorded on a predetermined recording medium, the market trend data input portion 1a may be composed of a reading device or equivalent for that recording medium, and if the market trend data is supplied by information transmission, it may be composed of a communication device or the like for receiving information by transmission. The instruction input portion 1b is composed of a keyboard, pointing device or the like, and inputs instructions such as are indicated by operation thereof to the information processing device 2. In the case where the market trend data or supplementary data are to be entered manually, the keyboard or the like of the instruction input portion 1b may be shared with the market trend data input portion.

The information processing device 2 comprises computation means, memory means, control means and the like capable of performing such operations as sorting, wavelet transform and multi-resolution analysis on market trend data, and is composed of a computer or the like having installed therein a program for executing various information processing operations for market trend analysis such as shall be described below. This information processing device 2 comprises an input data arranging portion 2a, a wavelet transform processing portion 2b, a multi-resolution analysis processing portion 2c and a multi-resolution analysis result processing portion 2d which can be achieved by the computing means by means of the above-mentioned program or the like.

The input data sorting portion 2a rearranges the market trend data from the market trend data input portion 1a, or sorts them into separate categories to make data sets arranged into a predetermined form. The wavelet transform processing portion 2b performs a discrete wavelet transform on the data sets produced by the input data arranging portion 2a to obtain a wavelet spectrum of the market trend data. The multi-resolution analysis processing portion 2c performs multi-resolution analysis of the wavelet spectrum from the wavelet transform processing portion 2b to obtain multi-resolution analysis results which are the inverse wavelet transforms of the wavelet spectrum of the market trend data at various levels. The multi-resolution analysis result processing portion 2d uses the multi-resolution analysis results for the various levels obtained by the multi-resolution analysis processing portion 2c and the data sets from the input data sorting portion 2a to perform operations such as a summation operation, a correlation operation or a convolution operation on predetermined combinations thereof. The specifics of the processing performed in the above-described information processing device 2 shall be made clear in the following explanation of the market trend analysis process.

The output device 3 is an external output device such as a display device or a printer associated with the information processing device 2, for providing an onscreen display or a printout of the output information from the information processing device 2 in a predetermined format.

### <Market Trend Analysis>

### (1) First Mode

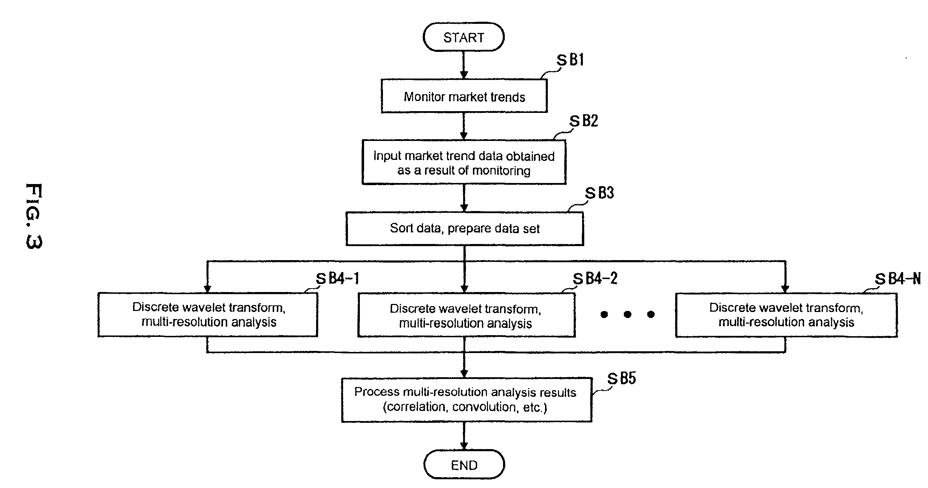

Next, the processing operations for market trend analysis according to the above-described structure shall be described. Fig. 2 is a flow chart showing the procedure for a first mode of this market trend analysis. This first mode is due to a basic analysis processing operation for performing market trend analysis by specifying a base function for use in the wavelet transform. A plurality of such base functions are prestored in memory means inside the information processing device 2, and one of the base functions is designated by the instruction input portion 1a.

In market trend analysis according to the first mode, market trends are monitored by polls, access logs or the like, and market trend data is obtained from the monitoring results (step SA1). For example, the information provided for various categories such as sex or age of the respondent or accessing party, or the responses to the polls can be demographically sorted (numerically encoded) to obtain market trend data represented as numerical data. The market trend data can then be inputted to the information processing device 2 by means of the market trend data input portion 1a (step SA2), and the processing at the information processing device 2 begun.

In an information processing device 2 which has received the market trend data, the input data sorting portion 1a sorts or lists the market trend data according to different categories to prepare data sets of a predetermined form (step SA3). That is, since the market trend data inputted to the information processing device 2 is in the form of unorganized numerical data representing various categories of information such as age, sex, poll responses and access log content taken from polls and access logs, these are sorted or listed according to category to produce data sets with the numerical data of the respective categories as variables.

For example, market trend data having an arbitrary number *n* of categories of numerical data are sorted or listed with the numerical data of the respective categories as independent variables, so as to create an *n*-dimensional data set with the number of respondents or accessing parties corresponding to each combination of numerical data as the elements. Alternatively, market trend data containing numerical data of an arbitrary *n*-th category is sorted or listed with the numerical data of the other (*n* - 1)-th categories as the independent variables, so as to result in an (*n* - 1)-dimensional data set with the numerical data of the respondents or accessing parties corresponding to each combination of numerical data for the remaining category as elements. The resulting data set is outputted by the input data sorting portion 2a to the output device 3 as required (in response to instructions from the instruction input portion 1b or the like), and displayed on the screen of the display device or printed out by a printer.

Next, the data set is wavelet-converted by means of a discrete wavelet transform (step SA4). That is, the wavelet transform processing portion 2b receives the data set from the input data sorting portion 2a, and applies a discrete waveler transform to the received data set. As a result, a wavelet spectrum of the market trend data is obtained.

The wavelet spectrum obtained here indicates the amount of data for each rate of change of elemental values in the data set, and is outputted from the wavelet transform processing portion 2b to the output device 3 for display and printing. As a result, for each rate of change of elemental values such as number of respondents or specific unorganized numerical data, the number of elements in the market trend data exhibiting that rate of change is indicated. Additionally, since this wavelet spectrum is determined by a discrete wavelet transform, these elements are displayed or printed in a form that is separated according to local rates of change or overall average rate of change. Consequently, the state of dispersion of monitored market trends can be observed with respect to the information taken as elements of the data set.

Next, a multi-resolution analysis is performed using the resulting wavelet spectrum (step SA5). The wavelet spectrum obtained by the wavelet transform processing portion 2b is outputted to the output device 3 and supplied to the multi-resolution analysis processing portion 2c in order to undergo a multi-resolution analysis process of the market trend data. In the multi-resolution analysis processing portion 2c, the levels of the supplied discrete wavelet spectrum are inverse wavelet transformed to obtain multi-resolution analysis results corresponding to various levels of resolution of the data sets.

The multi-resolution analysis results obtained here indicate the amount of data corresponding to each rate of change in the elemental values of the data set, and are outputted to the output device 3 for display and printing. The quantity of the information as separated by rate of change corresponds to an expression of how much numerical data indicating each rate of change in the elements is contained in the market trend data, thus filtering out the degree to which each rate of change is likely to be exhibited as a characteristic of the market trend data.

While the above gives the basic procedural operations of the first mode, it is also possible to sum the multi-resolution analysis results of other levels in addition to the above process, and to exhibit information separated by rate of change corresponding to the levels in the summed range. In this summation process, multi-resolution analysis results, e.g. for level 1 to level *m* are received at the multi-resolution analysis result processing portion 2d, these *m* multi-resolution analysis results are summed (superimposed), and the summation results are outputted to the output device 3 for display and printing. As a result, it is possible to express information separated by rate of change corresponding to levels 1 to *m*. With regard to instructions as to whether or not to perform this summation process or selection or levels to be summed, instructions can be made as appropriate by inputting them through the instruction input portion 1b.

### (2) Second Mode

Next, a second mode of market trend analysis shall be described. Fig. 3 is a glow chart showing the analysis processing operation of the second mode. This second mode is a mode wherein a plurality of different base functions are used for wavelet conversion, and the multi-resolution analysis results obtained by these base functions is further processed such as by a correlation operation. A plurality of the base functions used in this mode are also pre-stored in the memory means in the information processing device 2, such that the base functions can be selected as appropriate from the instruction input portion 1a.

In the market trend analysis of the second mode, the market is monitored for trends as in the above-described first mode, and this market trend data is inputted to the information processing device 2 to produce a data set. that is, market trends are monitored by polls, access logs or the like, market trend data is obtained from the monitoring results (step SB1), the market trend data expressed as numerical values is inputted to the information processing device 2 (step SB2), and in the information processing device 2, the input data sorting portion 1a sorts or lists the market trend data into categories to produce a data set of a predetermined format (step SB3).

Next, the wavelet transform processing portion 2b performs discrete wavelet transforms due to a plurality of selected base functions on the prepared data set, and the multi-resolution analysis processing portion 2c uses the resulting wavelet spectra to perform multi-resolution analysis (steps SB4-1 to SB4-N, wherein N is the number of selected base functions).

That is, the wavelet transform processing portion 2b receives a data set from the input data sorting portion 2a, and applies discrete wavelet transforms due to the respectively selected base functions to the received data set. As a result, a wavelet spectrum is obtained on the market trend data for each base function, and these are supplied to the multi-resolution analysis processing portion 2c. Then, at the multi-resolution analysis processing portion 2c, the wavelet spectra for each level of the wavelet spectra which have been supplied are inverse wavelet transformed to obtain multi-resolution analysis results corresponding to the respective levels of resolution of the data set with respect to each wavelet spectrum. As a result, multi-resolution analysis results are obtained for the case of each selected base function, and these are supplied to the multi-resolution analysis result processing portion 2d. As in the above-described first mode, the respective wavelet spectra and multi-resolution analysis results are outputted to the output device 3 for display or printing.

Here, the respective multi-resolution analysis results supplied to the multi-resolution analysis result processing portion 2d are the above-mentioned data set reproduced for the cases where the respectively selected base functions have been used in multi-resolution analysis by discrete wavelet transforms. Therefore, the multi-resolution analysis result processing portion 2d performs a correlation operation for determining the correlation factor between the respective multi-resolution results and the original data set from the input sorting portion 2a (step SB5). The correlation factor determined by this correlation operation can be used to estimate the rate of reproduction of the market trend data (data set) due to multi-resolution analysis for the cases where the respective base functions are used.

Furthermore, the multi-resolution analysis result processing portion 2d performs a convolution operation between the multi-resolution analysis results with the highest rate of reproduction (good data sets with the noise removed appearing at higher levels). In the results of this convolution operation, characteristics of the market trend data which are subsumed in the data set are emphasized and rise to the foreground. Thus, it is possible to estimate the positions of important information in the original data set or to extract only the useful information from the data set, so as to effectively act as a filter for filtering out only information of significance. The above-described correlation factors or results of the convolution operation determined by the multi-resolution analysis result processing portion 2d are also outputted as required to the output device 3 for display and printing.

### <Market Trend Analysis Example>

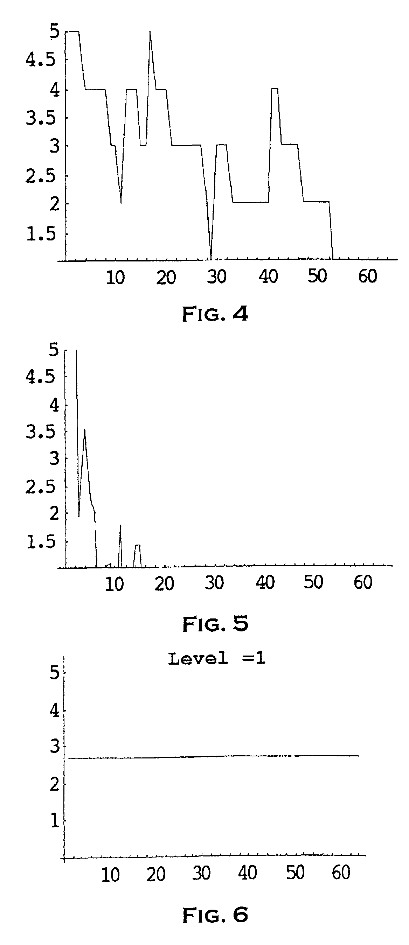

Next, an example of an application of market trend analysis according to the above-described embodiment to specific market trend data shall be described. Fig. 4 is an example showing the responses to a poll expressed as a one-dimensional data set. The poll was a survey of how often the respondent listens to AM radio and how often the respondent listens to FM radio, with the replies given in five grades for both cases, such that the higher the number of the grade, the more often that type of radio is listened to. The data set shown in Fig. 4 was prepared from the responses of 64 subjects, with the responses of the respective subjects arranged along the horizontal axis in the order of people who often listen to AM radio to people who hardly every listen to AM radio, and the vertical axis directly expressing the frequency by which FM radio is listened to (grade number). The relationship between AM radio and FM radio is difficult to read from the data set in the state shown in the drawing.

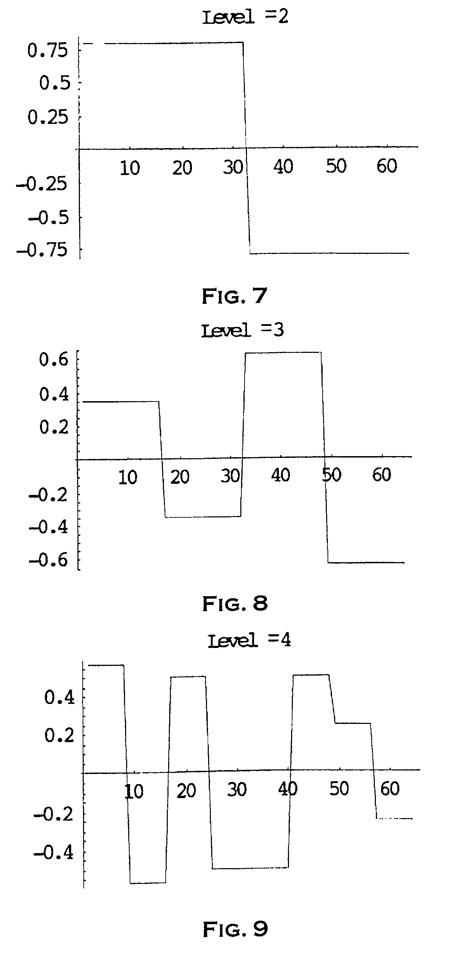

Fig. 5 shows the results of computation of a wavelet spectrum using a second-order Daubechies base function on the data set of Fig. 4. The fact that the spectrum is clustered near the origin indicates that this data set is governed by a rather average rate of change overall, and that the market trend data is therefore relatively easy to read.

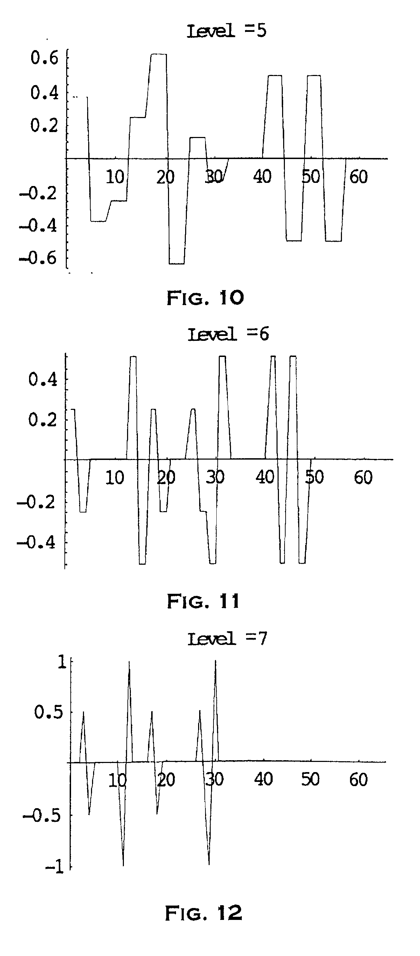

Figs. 6-12 show the results of wavelet multi-resolution analysis performed on the data set of Fig. 4 using a second-order Daubechies base function at various levels (Level 1 to Level 7). Those of lower levels extract only the more average rates of change, whereas those of higher levels extract those of more local rates of change.

Fig. 13 is a diagram showing the sum (results of superimposition) of the multi-resolution analysis results from the lowest level, Level 1, to Level 3. The summed multi-resolution analysis results shown in this diagram reveal that there is a general tendency for those who listen to a lot of AM radio to also often listen to FM radio, and for those who do not listen to AM radio also not to listen to FM radio.

Fig. 14 is a diagram showing the sum (results of superimposition) of the multi-resolution analysis results from Level 1 to Level 4. The summed multi-resolution analysis results shown in this diagram show, in addition to the general tendencies that those who listen to a lot of AM radio also listen to a lot of FM radio and those who do not listen to AM radio also do not listen to FM radio, that there is nevertheless a bracket (in the area of the Nos. 40 to 50) who do not listen to AM radio but listen to FM radio.

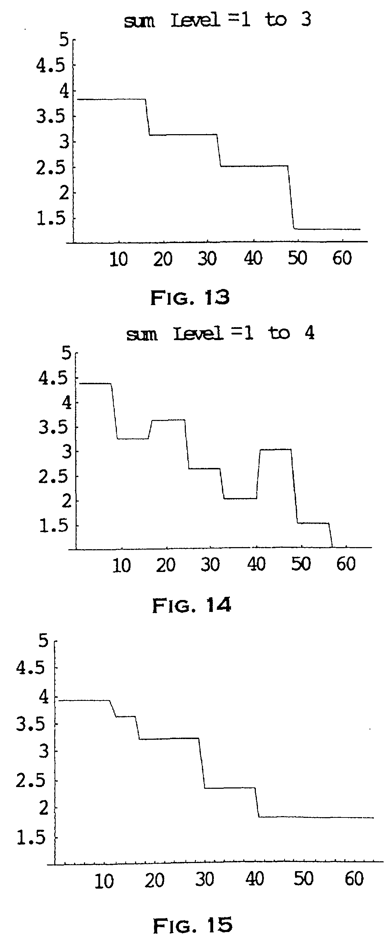

Fig. 15 is a diagram showing the results of averaging the data set of Fig. 4, a method which has been conventionally used. In this diagram, the average value of the amount of time spent listening to FM radio is indicated for the five grades of listening to AM radio. According to the results of the averaging shown in this diagram, the more one listens to AM radio, the more that person listens to FM radio, and those who do not listen to FM radio also do not listen to AM radio.

Therefore, according to the market trend analysis of the above-described embodiment, not only can results (Fig. 13) similar to the results of averaging (Fig. 15) which has been conventionally used be obtained, but results such as are not capable of being obtained by averaging alone (Fig. 14) can also be obtained.

### (2) Second Analysis Example

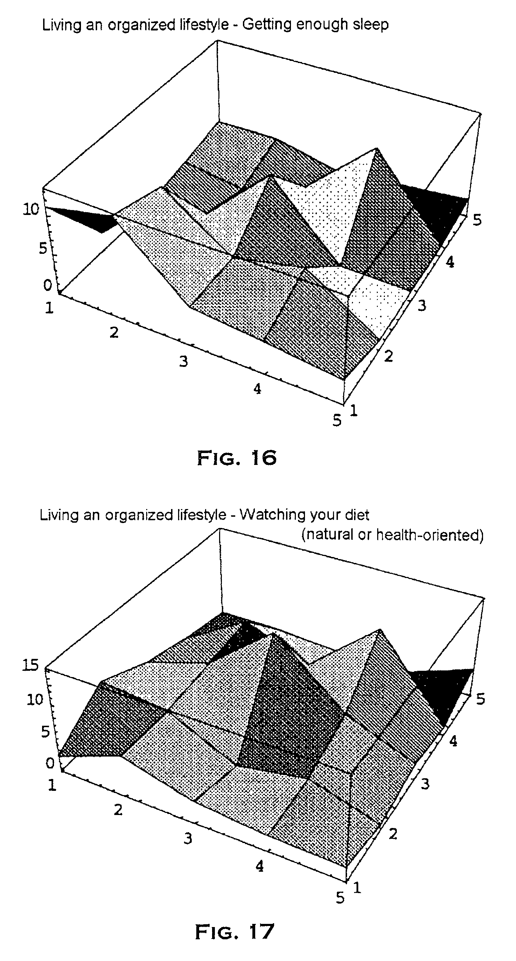

Figs. 16-19 show examples of expression of responses to polls shown as a two-dimensional data set. The poll concerned the degree of concern for one's health, with responses obtained for five questions each in five grades, with "very concerned" being assigned a grade of 1 and "not concerned" being assigned a grade of 5.

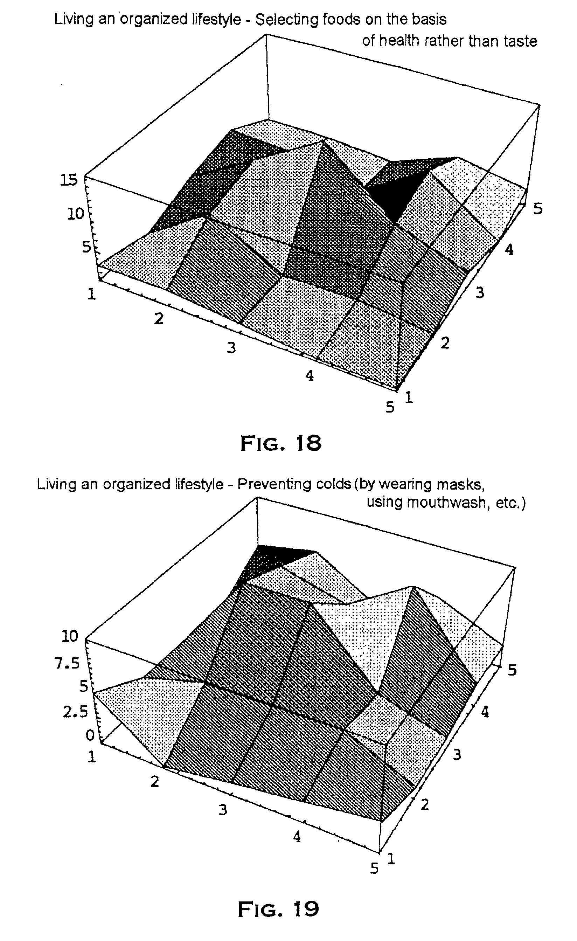

Fig. 16 is a diagram showing a two-dimensional data set in which the X axis (lateral axis) denotes the grades of responses to the question of "Living an organized lifestyle", and the Y axis (longitudinal axis) denotes those to the question of "Getting enough sleep", with the Z axis (height axis) denoting the number of people giving responses corresponding to each point on the (X, Y) coordinate plane. Fig. 17 is a diagram showing a two-dimensional data set in which the X axis (lateral axis) denotes the grades of responses to the question of "Living an organized lifestyle", the Y axis (longitudinal axis) denotes those to the question of "Watching your diet (natural or health-oriented)", and the Z axis (height axis) denotes the number of people giving responses corresponding to each point on the (X, Y) coordinate plane. Fig. 18 is a diagram showing a two-dimensional data set in which the X axis (lateral axis) denotes the grades of responses to the question of "Living an organized lifestyle", the Y axis (longitudinal axis) denotes those to the question of "Selecting foods on the basis of health rather than taste", and the Z axis (height axis) denotes the number of people giving responses corresponding to each point on the (X, Y) coordinate plane. Fig. 19 is a diagram showing a two-dimensional data set in which the X axis (lateral axis) denotes the grades of responses to the question of "Living an organized lifestyle", the Y axis (longitudinal axis) denotes those to the question of "Preventing colds (by wearing masks, using mouthwash, etc.) ", and the Z axis (height axis) denotes the number of people giving responses corresponding to each point on the (X, Y) coordinate plane. In the data sets indicated by Figs. 16-19, it is difficult to see any relationship between the responses to the survey in the raw state of the data sets.

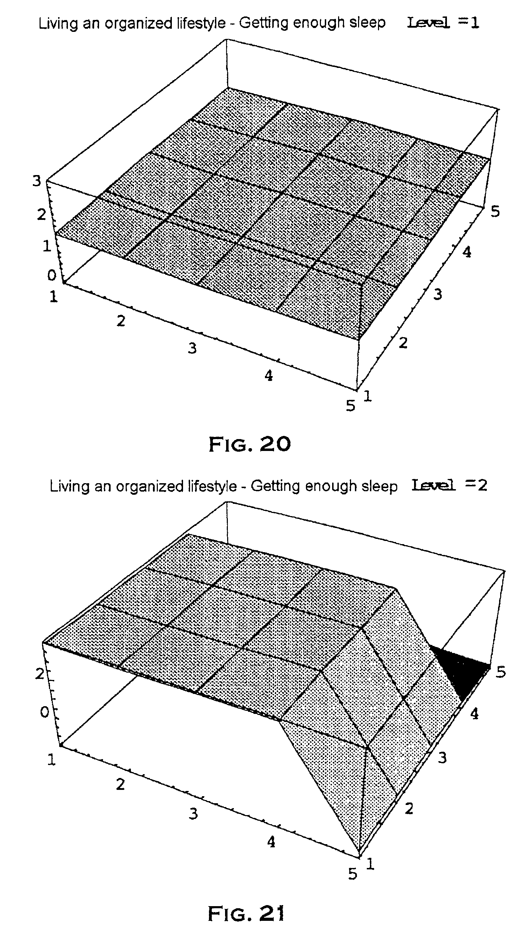

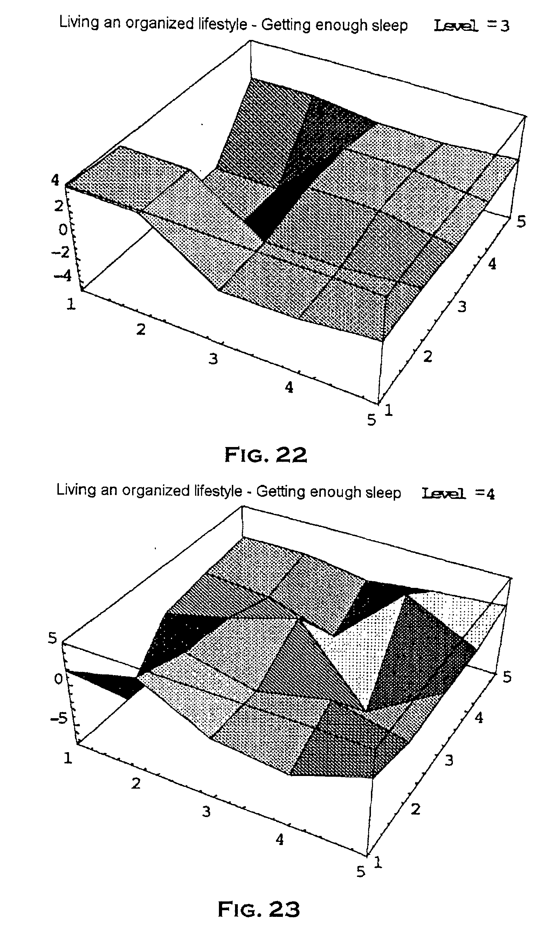

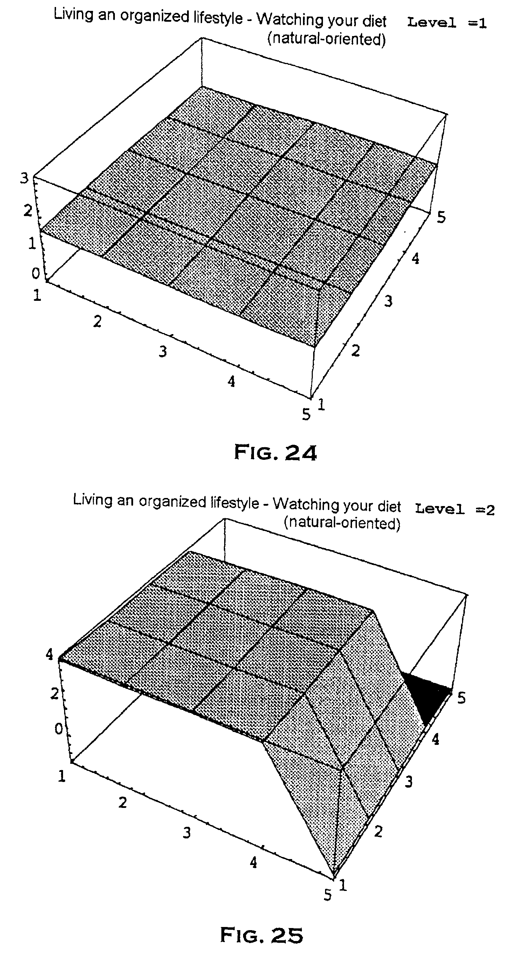

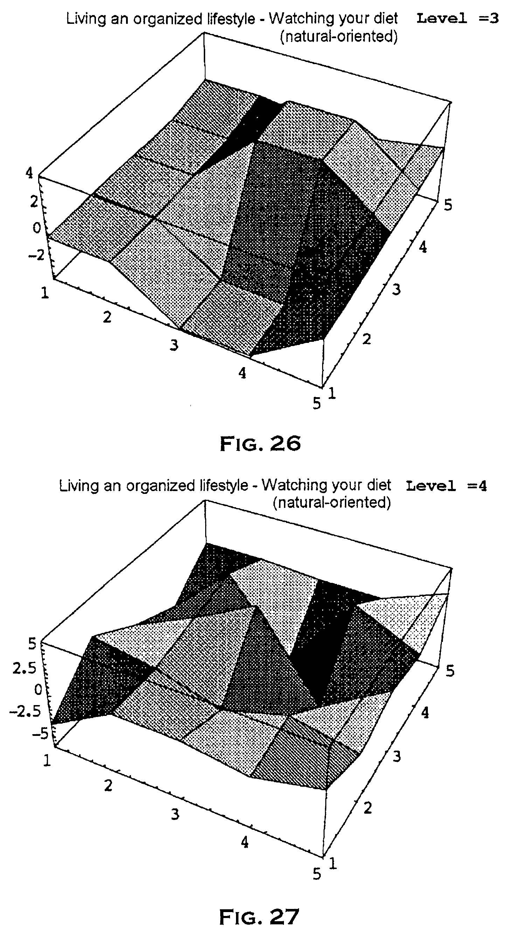

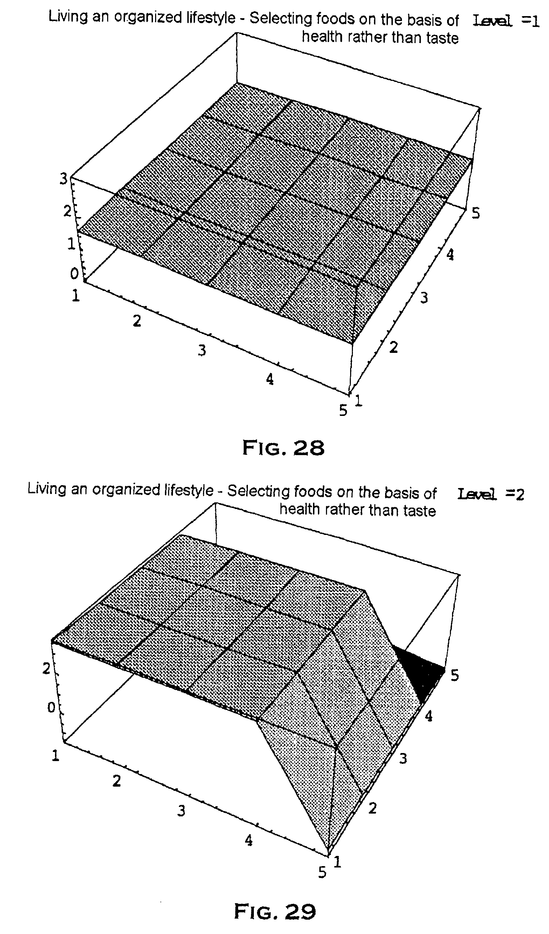

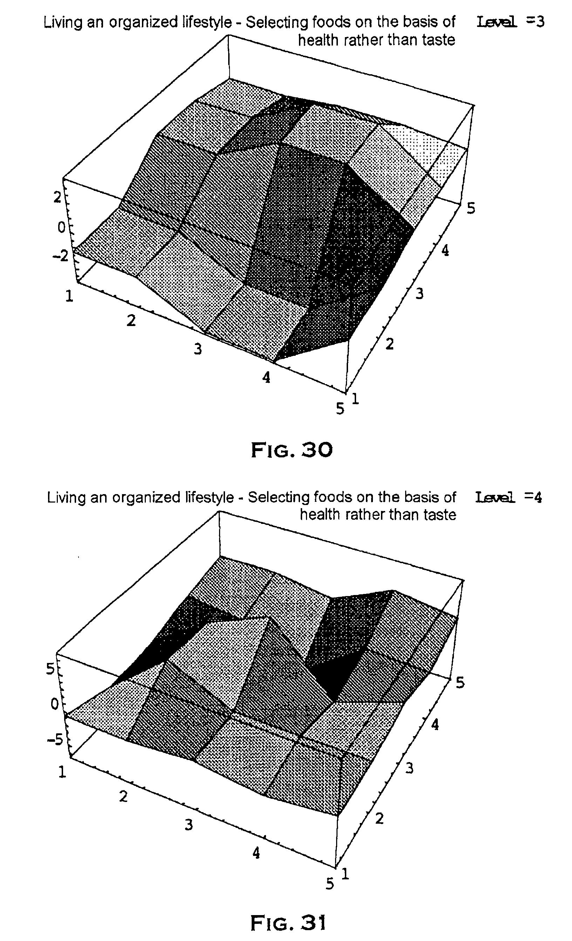

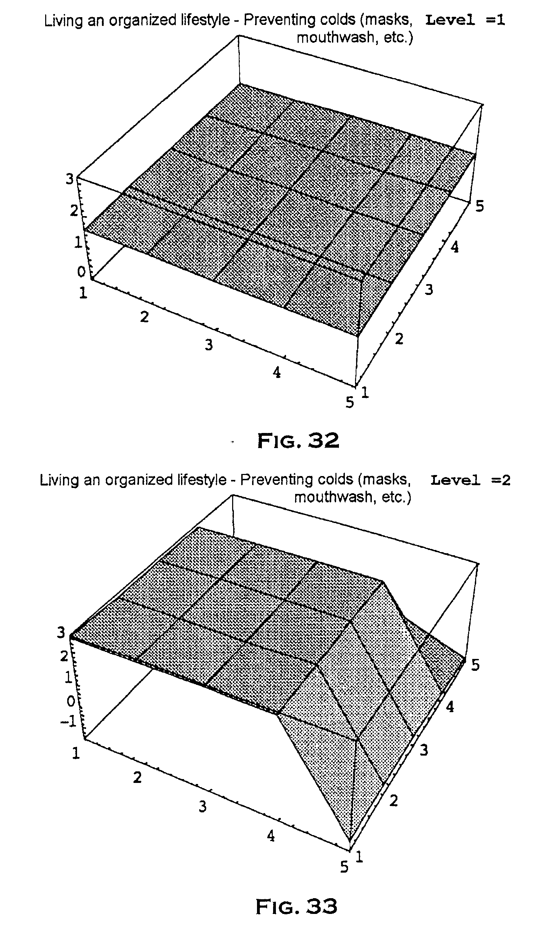

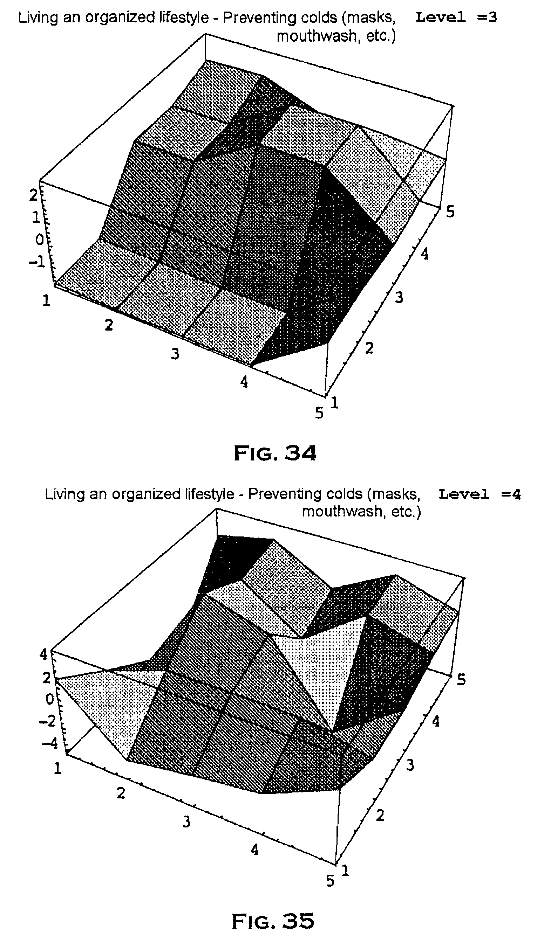

Figs. 20-23 show the results of using a second-order Daubechies base function to perform wavelet multi-resolution analysis at various levels (Level 1 to Level 4) on the combination of replies to "Living an organized lifestyle" and "Getting enough sleep" (the data set of Fig. 16). Figs. 24-27 show the results of using a second-order Daubechies base function to perform wavelet multi-resolution analysis at various levels (Level 1 to Level 4) on the combination of replies to "Living an organized lifestyle" and "Watching your diet (natural or health oriented)" (the data set of Fig. 17). Figs. 28-31 show the results of using a second-order Daubechies base function to perform wavelet multi-resolution analysis at various levels (Level 1 to Level 4) on the combination of replies to "Living an organized lifestyle" and "Selecting foods on the basis of health rather than taste" (the data set of Fig. 18). Figs. 32-35 show the results of using a second-order Daubechies base function to perform wavelet multi-resolution analysis at various levels (Level 1 to Level 4) on the combination of replies to "Living an organized lifestyle" and "Preventing colds (by wearing masks, using mouthwash, etc.)" (the data set of Fig. 19). In each of these results, the lower levels show only the more general rates of change, whereas the higher levels show the more local rates of change.

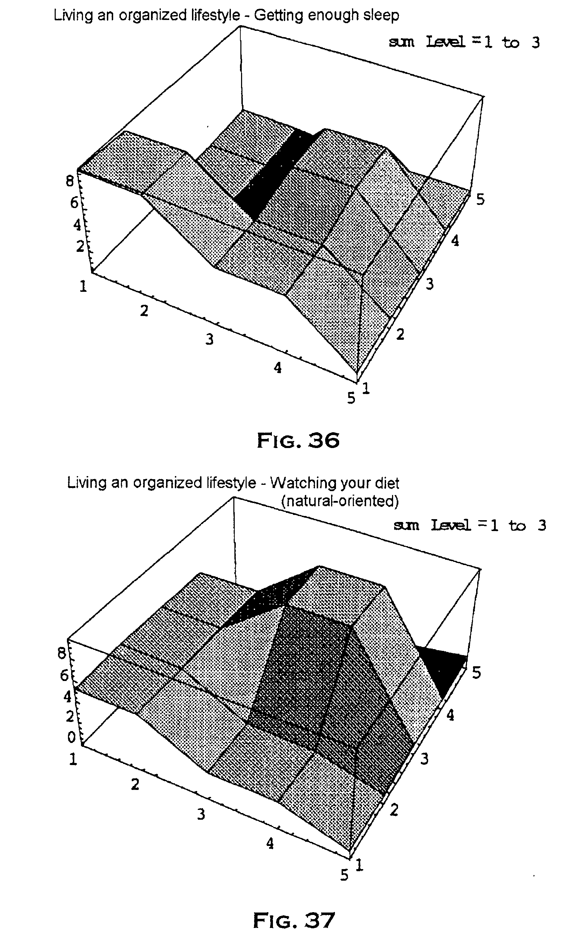

Fig. 36 is a diagram showing the sum (results of superimposition) of the lower levels, i.e. Levels 1 to 3 (Figs. 20, 21 and 22) of the multi-resolution analysis results for the combination of "Living an organized lifestyle" and "Getting enough sleep". From this summation, it is possible to see that most of those who have replied that they are concerned about leading an organized lifestyle are also concerned about their slumber, whereas those in other brackets are not as concerned.

Fig. 37 is a diagram showing the sum (results of superimposition) of the lower levels, i.e. Levels 1 to 3 (Figs. 24, 25 and 26) of the multi-resolution analysis results for the combination of "Living an organized lifestyle" and "Watching your diet (natural or health-oriented)". Fig. 38 is a diagram showing the sum (results of superimposition) of the lower levels, i.e. Levels 1 to 3 (Figs. 28, 29 and 30) of the multi-resolution analysis results for the combination of "Living an organized lifestyle" and "Selecting foods on the basis of health rather than taste". Whether due to the fact that both questions concerned one's diet, it is dear to see that their summation results are extremely similar. Additionally, according to these summations, it can be seen that regardless of concern for the degree of organization in one's lifestyle, most people were not concerned with these matters.

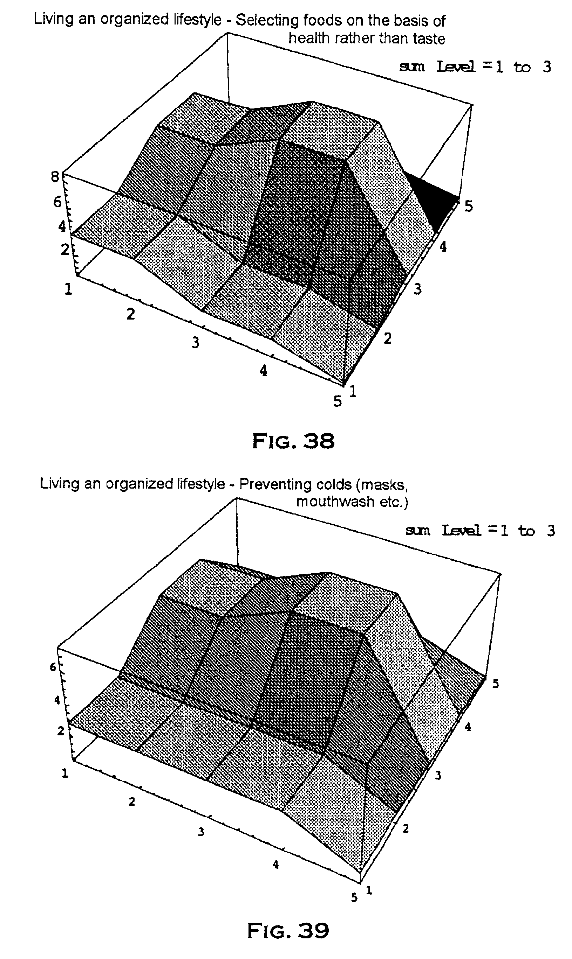

Fig. 39 is a diagram showing the sum (results of superimposition) of the lower levels, i.e. Levels 1 to 3 (Figs. 32, 33 and 34) of the multi-resolution analysis results for the combination of "Living an organized lifestyle" and "Preventing colds (by wearing masks, using mouthwash, etc.)". This shows that most people were not too concerned, and that there were very few people who were actively concerned with preventing colds.

In this way, by evaluating data by assessing the shape of the data after having removed the higher level parts in multi-resolution analysis in accordance with the market trend analysis method of the above-described embodiment, it is possible to remove the noise from market trend data, thus enabling data to be more clearly read, and offering material for evaluation as to whether the analysis results indicate data of similar properties.

While the structure and functions of the present invention have been described above by giving specific examples of possible embodiments, these embodiments are no more than examples used for the sake of aiding the reader in the understanding of the present invention, and they should by no means be construed as being such as to restrict the present invention in any way. Additionally, whereas those skilled in the art should find it quite obvious that various modifications of the present invention are possible on the basis of the descriptions of the embodiments given above, such modifications are also implicitly included within the gist of the present invention as set forth in the below-given claims.

## Claims

1. A market trend analyzing method **characterized by** comprising steps of:
performing (SA4) a wavelet transform on numerical data, obtained by numericizing information acquired by monitoring market trends, to obtain a wavelet spectrum of said numerical data; and
expressing the data such as to show an amount of information at each rate of change of said numerical data.

2. A market trend analyzing method **characterized by** comprising steps of:
performing (SA5) a multi-resolution analysis of numerical data, obtained by numericizing information acquired by monitoring market trends, using a discrete wavelet transform; and
expressing the data such as to show an amount of information at each rate of change of said numerical data.

3. A market trend analyzing method **characterized by** comprising steps of:
performing (SB4-1 to SB4-N) a multi-resolution analysis of numerical data, obtained by numericizing information acquired by monitoring market trends, using a discrete wavelet transform with a plurality of base functions to obtain multi-resolution analysis results based on each of said plurality of base functions;
determining (SB5) a correlation factor between the respective multi-resolution analysis results and said numerical data; and
assessing, based on said correlation factor, rates of reproduction in said numerical data according to the multi-resolution analysis results when using each of said plurality of base functions.

4. A market trend analyzing method in accordance with claim 3, wherein a convolution operation (S85) is performed using the multi-resolution analysis results with high rates of reproduction based on the results of assessment of said rates of reproduction.

5. A market trend analyzing device **characterized by** comprising:
data sorting means (2a) for forming a data set organized by monitored categories out of numerical data obtained by numericizing information acquired by monitoring market trends; and
converting means (2b) for performing a wavelet transform on said data set;
wherein the wavelet spectrum obtained by said converting means is used to express the data such as to show an amount of information at each rate of change of said numerical data.

6. A market trend analyzing device **characterized by** comprising:
data sorting means (2a) for forming a data set organized by monitored categories out of numerical data obtained by numericizing information acquired by monitoring market trends; and
analyzing means (2c) for performing multi-resolution analysis using a discrete wavelet transform on said data set;
wherein the results of the multi-resolution analysis by said analyzing means are used to express the data such as to show an amount of information at each rate of change of said numerical data.

7. A market trend analyzing device in accordance with claim 6, further comprising computing means (2d) for summing the analysis results for a plurality of levels in the multi-resolution analysis results of said analyzing means.

8. A market trend analyzing device **characterized by** comprising:
data sorting means (2a) for forming a data set organized by monitored categories out of numerical data obtained by numericizing information acquired by monitoring market trends;
analyzing means (2c) for performing multi-resolution analysis on said data set using a discrete wavelet transform with a plurality of base functions to obtain multi-resolution analysis results for each of said plurality of base functions; and
correlating means (2d) for determining a correlation factor between the respective multi-resolution analysis results obtained by said analyzing means and said data set;
wherein, based on said correlation factor, rates of reproduction in said data set is assessed according to the multi-resolution analysis results when using each of said plurality of base functions.

9. A market trend analyzing device as recited in claim 8, further comprising computing means (2d) for performing a convolution operation using the multi-resolution analysis results with high rates of reproduction based on the results of assessment of said rates of reproduction.
